Europäisches Patentamt

European Patent Office

Office européen des brevets

(11) Veröffentlichungsnummer: **0 032 717**
**A2**

(12) # EUROPÄISCHE PATENTANMELDUNG

(21) Anmeldenummer: 81100213.8

(22) Anmeldetag: 14.01.81

(51) Int. Cl.³: **A 61 B 19/00**

(30) Priorität: 16.01.80 DE 3001347

(43) Veröffentlichungstag der Anmeldung: **29.07.81**
**Patentblatt 81/30**

(84) Benannte Vertragsstaaten: **AT BE CH DE FR GB IT LI LU NL SE**

(71) Anmelder: **Hug Interlizenz AG, alte Zürcherstrasse 49, CH-8903 Birmensdorf (CH)**

(72) Erfinder: **Keller, Silvano, Zentrumstrasse 109, CH-5314 Kleindöttingen (CH)**

(74) Vertreter: **Fiedler, Otto Karl, Dipl.-Ing., Rheinhöhe 9, D-7891 Küssaberg 1 (DE)**

(54) **Schutzvorrichtung zur Vermeidung der Verbreitung von infizierenden Stoffen bei der Temperaturmessung von Patienten.**

(57) Bei Schutzhüllen für medizinische Thermometer, bestehend aus an ihren Kanten verschweissten Kunststoffstreifen, besteht das Problem der Irritation am Patientenkörper bei der Benutzung infolge der nach aussen vorstehenden, vergleichsweise harten Schweissnähte. Bei Unterbringung einer solchen inneren Schutzhülle in einer äusseren Schutzhülle wird ausserdem die übliche Salbenbeschichtung an der Aussenfläche der inneren Schutzhülle bei der Entnahme abgestreift, besonders wiederum an den Schweisskanten der inneren Hülle.

Die Schutzvorrichtung weist eine innere Schutzhülle mit nach innen vorstehenden Schweisskanten (b) auf, die durch Umkehren einer in üblicher Weise zunächst mit aussenliegenden Schweissnähten hergestellten Hülle gewonnen wird. An der Aussenseite der nach innen vorstehenden Schweissnähte bilden sich Rinnen (d) mit verstärkter Salbenfüllung (e).

0032717

Schutzvorrichtung zur Vermeidung der Verbreitung von infizierenden Stoffen bei der Temperaturmessung von Patienten.

Die Erfindung betrifft eine Schutzvorrichtung zur Vermeidung der
Verbreitung von infizierenden Stoffen bei der Temperaturmessung
von Patienten, die eine innere, das Thermometer aufnehmende
Schutzhülle umfasst und eine äussere Schutzhülle, die die innere
Schutzhülle mit dem Thermometer vor und nach der Temperaturmessung
einschliesst.

Das schwedische Patent Nr. 303009 beschreibt eine solche Schutzvorrichtung, bei welcher die innere Schutzhülle mittels zwei an
den Längskanten und in einem Ende zusammengeschweissten Kunststoff-Folienstreifen ausgeführt ist.

Bei der praktischen Temperaturmessung mit dieser inneren Schutzhülle um das Thermomether hat sich gezeigt, dass der Schweissrand (die Schweissnaht) bei gewissen Patienten Irritationen
(Reizungen) und sogar Blutungen der Rektalschleimhaut verursachen
kann.

Trotz verbesserter Schweisstechnik führen Fehlerhaftigkeiten
oder Ungleichmässigkeiten der Schweissbänder zu verdickten
Schweisskanten mit scharfen Rändern, woraus Irritationen (Reizungen) für die Patienten entstehen. Auf der Aussenseite der

inneren Schutzhülle wird bei der Herstellung der Schutzvorrichtung etwas Salbe aufgetragen um die Einführung des Thermometers in den Körper zu erleichtern. Bisweilen kann die aufgetragene Menge Salbe zu klein sein worauf der obenbeschriebene
Umstand mit einer unebenen, harten Schweissnaht, besonders bei
der Spitze, gar verstärkter auftritt. Aber auch bei hinreichender Salbendosis und Salbenverteilung wird nicht die Schleimhaut
gegen die scharfen Kanten durch die Salbe geschützt, da die
Salbe besonders, oder nur auf den glatten Flächen liegt und
nicht über der Schweissnaht.

Bei der Komposition der Salbe ist man auf das Problem gestossen,
wonach die Salbe mehr an der Innenseite der äusseren Schutzhülle
klebt als an der Aussenseite der inneren Schutzhülle, wegen der
Behandlung der inneren Schutzhülle mit Trennmitteln. Infolge
dessen ist oft die Salbenschicht die bei der Ausziehung der
inneren Schutzhülle mitfolgt sehr dünn und genügt nicht, um die
Schleimhaut gegen die Schweissnähte zu schützen.

Die Erfindung hat das Ziel, den genannten Nachteil zu eliminieren. Es hat sich gezeigt, dass dies in einer überraschend einfachen Weise bewerkstelligt werden kann, durch das Umwenden der
inneren Schutzhülle, ehe sie bei der Herstellung der Schutzvorrichtung von der äusseren Schutzhülle umgeben wird. Durch
die Umwendung der inneren Schutzhülle werden die steiferen und
härteren Schweissnähte gegen das Thermometer gewendet und können daher die Schleimhaut nicht mehr reizen. Durch die genannte

0032717

Vorkehrung entstehen zwei längslaufende Taschen oder Rinnen auf der Aussenseite der Nähte, wo ein Ueberschuss von Salbe sich sammelt und einen Extraschutz für die Schleimhaut gegen die Schweissnaht bildet.

Dank dem Aus- und Einstülpen der inneren Schutzhülle liegt diese beim Produktionsprozess frei in der äusseren Schutzhülle, ein Verhältnis, das zusätzlich die Vorteile bietet, die Salbe umher der inneren Schutzhülle anzubringen und die Einführung des Thermometers mit der inneren Schutzhülle in den Körper erleichtert. Bei der Einführung des Thermometers in die innere Schutzhülle laut vorgenanntem schwedischen Patent mit der Schweissnaht aussen, entsteht besonders am vorderen Ende eine Ausdehnung der inneren Schutzhülle sowie eine Ausstreckung der Naht, die dadurch noch härter und schärfer wird. Wenn dagegen die Schutzhülle gemäss vorliegender Erfindung aus- und eingewendet wird, liegen die Unebenheiten gegen das Thermometer und nicht gegen den Patienten. Die über der Schweissnaht liegende Folie wirkt schützend und ausgleichend auf die Naht und dadurch für den Patienten.

Die Zeichnung zeigt ein Ausführungsbeispiel einer erfindungsgemässen Vorrichtung. Es zeigt:

Fig. 1    Die innere Schutzhülle vor der Ein- und Auswendung

Fig. 2    Die innere Schutzhülle nach erfolgter Ein- und Auswendung

Fig. 3    Einen Querschnitt vor der Ein- und Auswendung

Fig. 4    Einen Querschnitt nach erfolgter Ein- und Auswendung

Fig. 5    Die innere Schutzhülle mit einem Thermometer in eine äussere Schutzhülle eingeführt.


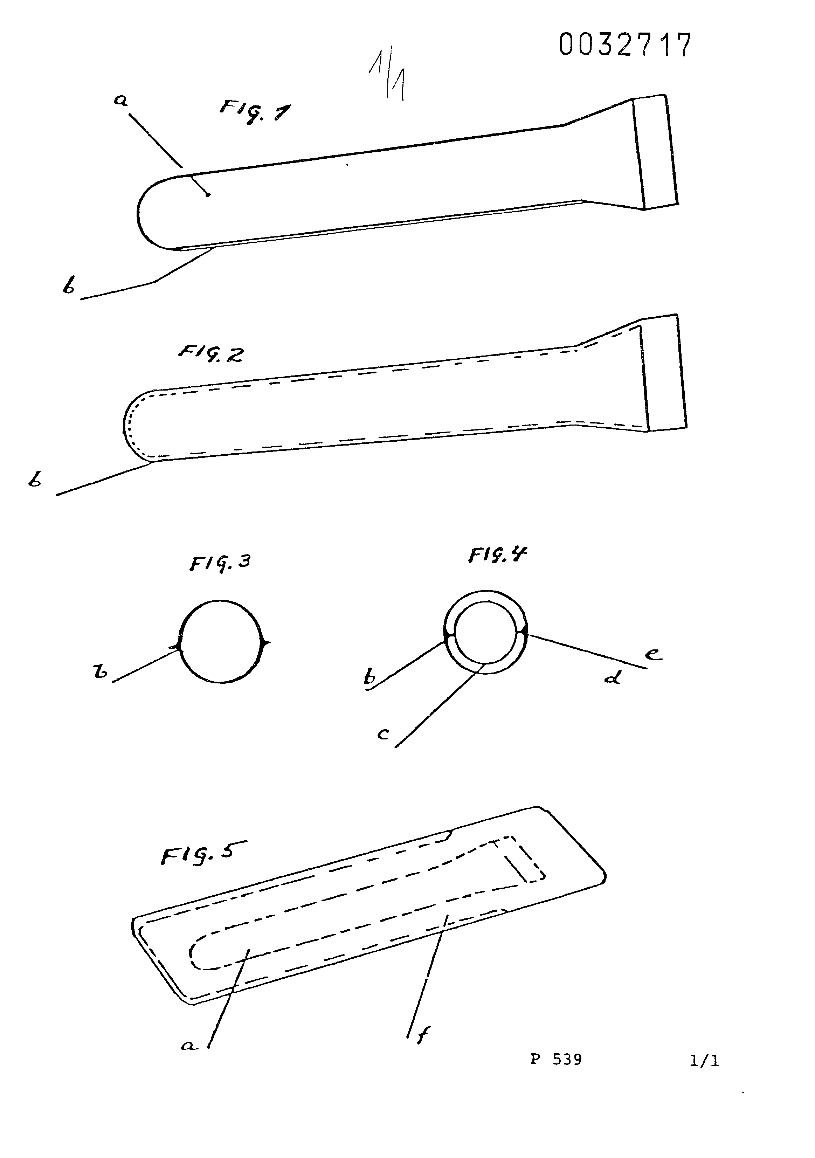

Die in Fig. 1 gezeigte innere Schutzhülle a ist durch Nähte b
geschweisst wobei die Naht b aussen liegt. Die Fig. 2 zeigt die
innenliegende Naht nach erfolgter Ein- und Auswendung. Die
Fig. 3 zeigt einen Querschnitt der inneren Schutzhülle mit
aussenliegender Naht b mit einer scharfen Kante. Die Fig. 4
zeigt, wie nach der Ein- und Auswendung der inneren Schutzhülle
die harte Naht b gegen das Thermometer c liegt. Die entstehenden
Taschen oder Rinnen d an der Aussenseite sind mit Salbe e gefüllt , wobei die Salbe auch den Umkreis der inneren Schutzhülle deckt. Die Fig. 5 zeigt die innere Schutzhülle a in eine
äussere Schutzhülle f eingeführt.

PATENTANSPRUECHE

---

1. Schutzvorrichtung zur Vermeidung der Verbreitung von infizierenden Stoffen bei der Temperaturmessung von Patienten die eine innere, das Thermometer aufnehmende Schutzhülle umfasst, und eine äussere Schutzhülle die die innere Schutzhülle mit dem Thermometer vor und nach der Termperaturmessung einschliesst, indem die innere Schutzhülle durch zusammengeschweisste Kunststoffstreifen hergestellt ist, dadurch gekennzeichnet, dass die innere Schutzhülle ganz oder teilweise mit einer in sich gekehrten Schweissnaht ausgeführt ist.

2. Schutzvorrichtung nach Anspruch 1, dadurch gekennzeichnet, dass die nach innen gekehrte Schweissnaht geleistet worden ist, dadurch dass nach dem Schweissen die innere Schutzhülle ganz oder teilweise ein- und ausgewendet wird.

3. Schutzvorrichtung nach Anspruch 1 oder 2, dadurch gekennzeichnet, dass die innere Schutzhülle mindestens teilweise mit einer Schicht Salbe belegt ist, die ein Desinfektionsmittel enthält.

4. Schutzvorrichtung nach Anspruch 1 bis 3, dadurch gekennzeichnet, dass die innere Schutzhülle ganz oder teilweise aus durchsichtiger Kunststoffolie hergestellt ist.

5. Schutzvorrichtung nach Anspruch 1 bis 3, dadurch gekennzeichnet, dass eine Wand der inneren Schutzhülle aus einer nicht durchsichtigen Kunststoffolie hergestellt ist.

0032717

FIG. 1

FIG. 2

FIG. 3

FIG. 4

FIG. 5

P 539     1/1